# EUROPEAN PATENT SPECIFICATION

(11) **EP 0 413 255 B1**
(45) Date of publication and mention of the grant of the patent: **13.03.1996**
(21) Application number: 90115268.6
(22) Date of filing: 09.08.1990
(51) Int. Cl.: H01B 13/14, C08J 9/12

(54) **Method for manufacturing a foam-insulated electric wire**
Verfahren zur Herstellung eines schaumisolierten elektrischen Drahtes
Procédé de fabrication d'un fil électrique isolé par de la mousse

(30) Priority: 18.08.1989 JP 212381/89; 25.12.1989 JP 335848/89
(43) Date of publication of application: 20.02.1991
(73) Proprietor: FUJIKURA LTD., Kohtoh-ku Tokyo (JP)
(72) Inventor: Tsuchiya, Susumu, Sakura-shi, Chiba-ken (JP); Ohnuma, Toshio, Narita-shi, Chiba-ken (JP)
(74) Representative: Nöth, Heinz, Dipl.-Phys.

(56) References cited:
- EP-A- 0 122 460
- CA-A- 1 103 871
- GB-A- 1 399 102
- GB-A- 2 070 617

## Description

This invention relates to a method for manufacturing a foam-insulated electric wire as set out in the preamble of claim 1.

The foam-insulated electric wire is made of a core conductor covered with a foam layer made of an electric insulating resin. The foam layer is shielded, and the wire is used as part of a coaxial cable. The foam layer effectively reduces the amount of static electricity between the core conductor and the shield. For such coaxial cables, the development of an advanced foam (low dielectric constant) product which causes a low loss of high frequency signals and a short delay time to enhance high speed transmission is desirable so as to meet the requirements of the present-day high speed/high density telecommunication industry.

Examples of processes for manufacturing foam-insulated electric wire foam for coaxial cables are known as follows:
(1) A chemical foaming agent is mixed into the synthetic resin which forms the foam layer. Gas is generated by thermally decomposing the foaming agent, and the synthetic resin, is foamed.
(2) A physical foaming agent consisting of FREON (trademark for liquid halogenated hydrocarbon by DUPONT) with a specific boiling point is pumped into an extruder by way of a high pressure pump to let the FREON come into contact with the molten synthetic resin in the extruder so as to heat it above the atmospheric boiling point, and the foam layer is formed by evaporation and expansion caused by the decompression (upon release into the atmosphere) after extrusion.
(3) Nitrogen gas is forced into molten resin in the extruder and expanded by decompression after extrusion (release into the atmosphere) so as to promote foaming.

The above manufacturing processes (1, 2, 3), however, had the following problems yet to be solved:
1.) The maximum feasible foaming degree by using a chemical foaming agent as above is not high, for example, the maximum foaming degree of polyethylene is about 70%, and the maximum foaming degree of fluorine resin is about 60%. If a higher foaming degree is to be obtained, more gas must be generated from the foaming agent. However, as it is difficult to generate, the foam forms an uneven configuration, which causes an uneven volume of static electricity or degraded mechanical strength.
2.) In the process using FREON as a physical foaming agent as above, as liquid FREON is pre-dispersed in the synthetic resin and evenly volatilised and expanded, a high degree of foaming can be easily achieved. However, problems arose recently as FREON gas is known to escape into the ambient air during the process of foam insulated electric wire production, and to destroy the ozone layer. Thus, a new environmental issue has emerged.
3.) The process of introducing a large quantity of gas as above to enhance the foaming degree has raised the problem of an inability to maintain the foam.

The document CA-A-1 103 871 describes a method for producing a cable conductor wire which is electrically insulated with a coloured cellular thermoplastic polymer material in extruded form. The method is intended to overcome the difficulties of mixing polymers and blowing agents prior to the extrusion in such manner that the polymer is sufficiently molten and at the same time a premature thermal decomposition of the blowing agent is avoided. In the described method the insulating polymer material and a predetermined amount of a pelletized material containing predetermined amounts of a particulate pigment composition and of a particulate, solid blowing agent in a polymer matrix compatible with the insulating polymer material are passed through a screw extruder whilst being heated to melt the polymer material and form an intimate mixture of the polymer and the ingredients of the pellets. At the temperatures employed the blowing agent is thermally decomposed to produce small bubbles of a gaseous product which are maintained in a compressed state. The molten mixture is extruded to form a coating around a moving conductor. Simultaneously the gas bubbles in the extruded coating expand to produce a cellular structure.

The document GB-A-1 399 102 describes a method of making laminates of attractive appearance by simultaneously extruding at least one layer of plastics material forming a non-foamed film and at least one layer of plastics material into which a small quantity of water has been introduced as a foaming agent by mixing the water with the polymer granules before extrusion, the layers being brought together before they have cooled from a molten or heat-softened state. The use of water alone is reported to give an irregular layer with cavities in its surface extending through the foam layer to the underlying film layer. Preferably a gas-generating substance is used in addition to water.

The document EP-A-0 122 460 describes a process for producing a thermoplastic resin foam by using an aqueous medium as a blowing agent. Water is described to have a relatively low boiling point, so that theoretically it can be used as a blowing agent, but a poor compatibility with hydrophobic resins. In order to overcome this disadvantage a resin compound is used which is composed of porous agglomerated particles resulting from partial melt-adhesion of thermoplastic resin particles coated with a fine hydrophilic solid powder which does not melt at the melting temperature of the resin particles. This resin compound is first mixed with water or another aqueous medium in a mixer and then melt-kneaded in an extruder under a pressure that inhibits evaporation of the aqueous medium, and then extruded.

The document GB-A-2 070 617 reports that coaxial cables with a foam dielectric between the inner and the outer conductor have the disadvantage of a high dielectric loss which, however, is offset by the advantage of the foam in blocking the transmission into the cable of moisture which would greatly increase the losses and even render the cable inoperative. A foamed fluorinated ethylenepropylene resin is regarded as being a suitable dielectric, but a known method of foaming this resin using a fluoromethane blowing agent and boron nitride as a nucleating agent is reported as not being suitable for the manufacture of commercial cables, because the use of boron nitride in sufficient amounts to produce a small cell structure impairs the melt strength of the resin. To overcome these disadvantages a process is described in which a mixture of a perfluorocarbon resin, a polytetrafluoroethylene nucleating agent and a volatile blowing agent are extrusion coated onto the inner conductor. The mixing is performed by injecting the blowing agent into the molten mixture in the extruder or by dissolving the volatile fluid in the polymer prior to the heating and/or extrusion process.

It is the object of the invention to provide a method according to the preamble of claim 1, in which the wire is coated with an insulating layer containing an evenly dispersed foam that is produced with enhanced foaming and without using a volatile halogenated hydrocarbon.

According to the invention, this object is achieved by the characterizing features of claim 1.

In this invention, a foaming liquid, which is mainly composed of water and has a lower boiling point than the melting point of a thermofused resin when put under atmospheric pressure or greater, is mixed with the resin. Then, the resin mixed with the foaming liquid is extruded to cover the core conductor with foam formed by releasing the above pressure.

The foaming liquid, mixed with molten resin in the extruder, is heated to a point above its atmospheric boiling point; the extrusion coating of this mixture forms a resin coat around the core conductor. As the resin coat is exposed to the air after extrusion coating, the heated foaming liquid evaporates and expands so that the foaming degree is enhanced. Furthermore, as the atmospheric boiling point of the foaming liquid is lower than the melting point of the resin, the resin hardens while the foam maintains its configuration, after which the evaporated foaming liquid liquefies, diminishing its volume, which ensures the maintenance of foam. By such a method, an electric wire insulated with a foamed layer having an advanced degree of foaming is produced without involving FREON, which leaves the environment unharmed.

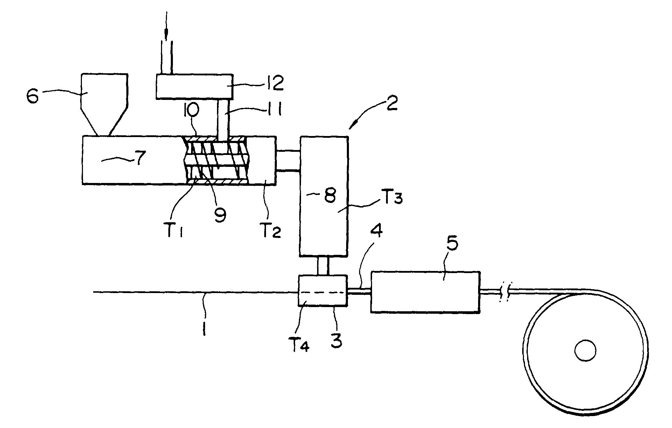

The drawing illustrates part of the extruder used for embodying this invention.

The drawing shows the coating equipment of the foam insulated wire, as used in an embodiment of this invention.

A core conductor 1 is wound out from a reel, and when it passes through an extruder head 3 of an extruder 2, it is contacted with foam resin 4 in the extruder head 3, and after it is cooled in a water cooling bath 5, it is wound on the reel. The extruder head 3 has a tubular die (not shown) which has a hollow to pass the core conductor 1 and a hollow to supply the form resin around the core conductor 1. The extruder 2 works in 2 stages. The pelletized raw material beads fed in a hopper 6 are forwarded to a first stage extruder unit 7 and heated to melting point or above, then forwarded to a second stage extruder unit 8 while being mixed and heated, and then fed to the extruder head 3 to coat the core conductor 1.

The above first and second stage extruder units 7 and 8 compound and extrude the molten resin by means of their respective built-in screw feeders 9. As illustrated, part of the intermediate unit of the screw feeder 9 that composes the first stage of the extruder unit 7 is omitted. A foaming liquid feed pipe 11 is connected with a casing 10 at the position corresponding to the omitted unit (vent unit), and water is fed as a foaming liquid via a high pressure quantitative pump 12 connected to the pipe 11. The heating and temperature of the extruder 2 are partly adjusted by bringing a thermal catalyst into contact with exterior of casing 10 or by electrically heating casing 10.

The extruder 2 is structured in 2 stages to ensure strength. However, the first stage and second stage may be integrated into a single structure if the specific heating and mixing requirements can be met in one stage.

Specifications of the extruder 2 in the embodiment are as follows:
D₁=D₂=φ25mm
L₁/D₁=28
L₂/D₂=28
(L₁=length of first stage extruder unit, L₂=length of second stage extruder unit, D₁=caliber of first stage extruder unit, D₂=caliber of second stage extruder unit.).

A chemical foaming agent is mixed with the raw material beads prior to feeding them into the hopper 6. A chemical foaming agent, such as azodicarbonamide (ADCA), generates gas when it is fed into and thermocracked in the extruder 2. The chemical foaming agent is dispersed into the molten resin and thermocracked. As a result, fine gas bubbles are generated at many spots in the molten resin, where foaming starts (foaming nuclei). The water fed into extruder 2 is heated to the boiling point or above, but as the pressure in extruder 2 is above atmospheric pressure, it disperses as minute drops at the foaming-start spots in the molten resin.

In this embodiment the pellet-form resin is heated in the first extruding unit 7 of the extruder 2 to its melting point or above (thermoplastic condition), but to the chemical foaming agent's decomposition temperature or below. This is done at a position before the foaming liquid feed pipe 11. As soon as it fuses, it is mixed with water from the foaming liquid feed pipe 11 which generates gas after being heated up to the decomposition point of the chemical foaming agent or above, and bubbles generated by this gas disperse in the molten resin. In the second stage unit 8 of the extruder 2, a more even mixture of molten resin and water is available, and a viscosity of the molten resin which matches the extrusion can be obtained by temperature adjustment. The melting point referred to here means the temperature at which the resin becomes thermoplastic.

The chemical foaming agent in this embodiment acts as a foam nucleating agent (a substrate added for the purpose of evenly dispersing the foaming spots in the resin) by dispersing in the molten resin. An inorganic nucleating agent such as talc, silica, or boron nitride is added to the chemical foaming agent; it is required to have the following properties:
(1) Better affinity for the foaming liquid than the resin.
(2) Easily dispersible in powder form in the resin.
(3) Not cracked at the resin's melting temperature.
(4) It should be selected from inorganic materials.

The mixture of a water absorbent in the molten resin is recommended as an effective means to disperse the water evenly. Water absorbents are substances which powerfully absorb the foaming agent liquid (water, in the case of this embodiment), such as acrylic water-absorbing resins or gel substances. The water absorbent is prepared in pellet or powder form to facilitate its even mixture into the raw material beads.

The water absorbent is accepted as long as it has a better affinity for water than molten resin has, so that positive water absorbing properties are not a top requirement. Therefore, ADCA, which is mixed as a chemical foaming agent, talc, or silica etc., which is mixed as a nucleating agent, may be given the substantial role of water absorbent.

Alcohols (such as alcohol, methanol, butanol), which are water soluble and have lower boiling points than water, may be mixed with the foaming liquid to bring its boiling point sufficiently lower than the melting point of the resin. When the boiling point is sufficiently lower than the melting point of the resin, the resin cures while the foaming liquid is expanded, causing the evaporated foaming liquid to liquefy and reduce in volume so that the generation of bubbles is secured.

The manufacturing parameters when fluorine resin is selected and when a polyolefine resin is selected, are shown below:

If fluorine resin is used:

| | | |
|---|---|---|
| Resin | FEP | 100 parts |
| Nucleating Agent | BN (Boron Nitride) | 0.5 - 1.0 parts |
| Foaming liquid | Water | 0.1 - 5 parts |
| Core conductor external diameter | | φ 0.2 mm |
| Foam layer external diameter | | φ 1.0 mm |
| T1 | 360°C | |
| T2 | 360 - 370°C | |
| T3 | 300 - 370°C | |
| T4 | 290 - 380°C | |
| P | 78.5 - 245 bars (80 - 250 kgf/cm) | |

As a matter of course, the temperature in each process must be maintained at the melting point of the resin or above.

As there is no chemical foaming agent which cracks at the melting point of the fluorine resin, no chemical foaming agent is added.

Under the above conditions, a uniform foaming degree of about 70% was obtained. If the mixing volume of the nucleating agent exceeds the above level, it does not contribute to the even distribution of foam, and it also degrades the mechanical and electric properties of the resin. If the mixing volume of the nucleating agent falls below the above level, the distribution of foam becomes uneven. If the mixing volume of water exceeds the above level, problems such as combined foam or unstable extrusion arise. In case the mixing volume of water falls below the above level, the necessary degree of foaming cannot be achieved. The appropriate volume of water absorbent to be added to obtain even dispersion of water is about 1.0 parts. The excessive addition of water absorbent degrades the electric and mechanical properties of the resin, while the addition of an insufficient volume causes an uneven dispersion of water.

FEP means a copolymer of tetrafluoroethylene and hexafluoropropylene.

The following fluorine resin may replace FEP:
PFA --- a copolymer of tetrafluoroethylene and perfluoroalkylvinylether.
ETFE --- a copolymer of tetrafluoroethylene and ethylene

If polyethylene is used:

| | | |
|---|---|---|
| Resin | PE | 100 parts |
| Chemical foaming agent | ADCA | 0.3 - 2.0 parts |
| Nucleating agent | TALC | 0.3 - 1.0 parts |
| Foaming liquid | water | 0.2 - 1.0 parts |
| Core conductor external diameter | | φ1.3 mm |
| Foam layer external diameter | | φ5.0 mm |
| T1 | 180°C | |
| T2 | 180 - 200°C | |
| T3 | 125 - 160°C | |
| T4 | 125 - 150°C | |
| P | 78.5 - 196 bars (80 - 200 kgf/cm) | |

Under such conditions, a uniform foaming degree of about 85% was obtained.

If the addition of ADCA exceeds the above level, excessive decomposed gas is generated, so that independent foam is not maintained. If it falls under the above level, the specific foaming degree cannot be achieved. If the mixing volume of the nucleating agent and foaming agent do not conform to the above level, problems identical to those of the fluorine resin arise.

The above PE is a blend of HDPE (High Density Polyethylene) and LDPE (Low Density Polyethylene), but may be either HDPE or LDPE alone. Such PE may be replaced with polypropylene as well.

By such a process, a foam insulated electric wire with a foam layer coating around the core conductor is produced. Such foam-insulated electric wire is covered with a shield, and is then covered with a sheath, which altogether forms a coaxial cable.

## Claims

1. A method for manufacturing a foam-insulated electric wire by extrusion-coating the surface of a core conductor (1), wherein
- an insulating resin (4), mixed with a nucleating agent which forms dispersed nuclei for the formation of foam, is heated and molten in an extruder (2),
- a foaming liquid having, under atmospheric pressure or greater, a boiling point that is lower than the melting point of the resin (4) is fed into the extruder (2) to be mixed with the molten resin (4) under a pressure above atmospheric level, and
- the core conductor (1) is passed through the extruder (2) in contact with the resin (4) and extrusion-coated with the resin (4) mixed with the nucleating agent and the foaming liquid agent, so that the core conductor (1) becomes covered with foam formed by the release of pressure,
characterized by using a foaming liquid containing water, and a nucleating agent consisting of an inorganic substance.

2. A method according to claim 1, characterized by mixing with the resin (4) a chemical foaming agent that generates gas when thermally decomposed by the heat of the molten resin.

3. A method according to claim 1 or 2, characterized by mixing with the resin (4) a substance having a greater affinity for water than the resin (4).

4. A method according to any one of claims 1 to 3, characterized by using a resin (4) which is polyethylene.

5. A method according to any one of claims 1 to 3, characterized by using a resin (4) which is a fluorine resin.

6. A method according to any one of claims 1 to 3, characterized by using a resin (4) which is polypropylene.

7. A method according to any one of claims 1 to 3, characterized by using a resin (4) which is a mixture of polyethylene and polypropylene.

8. A method according to any one of claims 1 to 7, characterized by using boron nitride, talc or silica as the nucleating agent.

## Patentansprüche

1. Verfahren zur Herstellung eines schaumisolierten elektrischen Drahtes durch Extrusionsbeschichten der Oberfläche einer Kernader (1), bei dem
- ein Isolierharz (4), das mit einen Keimbildner vermischt ist, welcher dispergierte Keime für die Schaumbildung erzeugt, in einem Extruder (2) erwärmt und geschmolzen wird,
- eine Treibflüssigkeit, die unter dem Atmosphärendruck oder einem höheren einen Siedepunkt aufweist, welcher niedriger ist als der Schmelzpunkt des Harzes (4), zum Vermischen mit dem geschmolzenen Harz (4) unter einem oberhalb des atmosphärischen Niveaus liegenden Druck, in den Extruder (2) eingeführt wird, und
- die Kernader (1) in Kontakt mit dem Harz (4) durch den Extruder (2) hindurchgeführt und mit dem mit dem Keimbildner und der Treibflüssigkeit vermischten Harz (4) extrusionsbeschichtet wird, so daß die Kernader (1) mit Schaum bedeckt wird, der durch das Nachlassen des Druckes gebildet wird,
gekennzeichnet durch die Verwendung einer Wasser enthaltenden Treibflüssigkeit und eines Keimbildners, der aus einer anorganischen Substanz besteht.

2. Verfahren nach Anspruch 1, gekennzeichnet durch das Vermischen mit dem Harz (4) eines chemischen Treibmittels, welches Gas erzeugt, wenn es durch die Wärme des geschmolzenen Harzes thermisch zersetzt wird.

3. Verfahren nach Anspruch 1 oder 2, gekennzeichnet durch das Vermischen mit dem Harz (4) einer Substanz, die eine größere Affinität für Wasser aufweist als das Harz (4).

4. Verfahren nach einem der Ansprüche 1 bis 3, gekennzeichnet durch die Verwendung eines Harzes (4), welches ein Polyethylen ist.

5. Verfahren nach einem der Ansprüche 1 bis 3, gekennzeichnet durch die Verwendung eines Harzes (4), welches ein Fluorharz ist.

6. Verfahren nach einem der Ansprüche 1 bis 3, gekennzeichnet durch die Verwendung eines Harzes (4), welches ein Polypropylen ist.

7. Verfahren nach einem der Ansprüche 1 bis 3, gekennzeichnet durch die Verwendung eines Harzes (4), welches eine Mischung aus Polyethylen und Polypropylen ist.

8. Verfahren nach einem der Ansprüche 1 bis 7, gekennzeichnet durch die Verwendung von Bornitrid, Talk oder Siliciumdioxid als Keimbildner.

## Revendications

1. Un procédé de fabrication d'un fil électrique par enrobage par extrusion de la surface d'un conducteur (1), dans lequel
- une résine isolante (4), mélangée à un agent de formation de noyaux qui forme des noyaux dispersés pour la production de mousse, est chauffé et fondu dans une extrudeuse (2),
- un liquide moussant ayant, sous une pression égale ou supérieure à la pression atmosphérique, un point d'ébullition qui est inférieur au point de fusion de la résine (4), est introduit dans l'extrudeuse (2) pour être mélangé à la résine en fusion (4) sous une pression supérieure au niveau atmosphérique, et
- le conducteur (1) est mis en contact dans l'extrudeuse (2) avec la résine (4) et est enrobé par extrusion de la résine (4) mélangée à l'agent de formation de noyaux et à l'agent moussant liquide, de sorte que le conducteur (1) est revêtu de la mousse formée par la détente de la pression,
caractérisé par l'utilisation d'un liquide moussant contenant de l'eau, et d'un agent de formation de noyaux constitué d'une substance inorganique.

2. Un procédé selon la revendication 1, caractérisé par le mélange avec la résine (4) d'un agent moussant chimique qui génère un gaz lorsqu'il est décomposé thermiquement par la chaleur de la résine en fusion.

3. Un procédé selon la revendication 1 ou 2, caractérisé par le mélange avec la résine (4) d'une substance ayant une plus grande affinité avec l'eau que la résine (4).

4. Un procédé selon l'une ou l'autre des revendications 1 à 3, caractérisé par l'utilisation d'une résine (4) qui est du polyéthylène.

5. Un procédé selon l'une ou l'autre des revendications 1 à 3, caractérisé par l'utilisation d'une résine (4) qui est une résine de fluor.

6. Un procédé selon l'une ou l'autre des revendications 1 à 3, caractérisé par l'utilisation d'une résine (4) qui est du polypropylène.

7. Un procédé selon l'une ou l'autre des revendications 1 à 3, caractérisé par l'utilisation d'une résine (4) qui est un mélange de polyéthylène et de polypropylène.

8. Un procédé selon l'une ou l'autre des revendications 1 à 7, caractérisé par l'utilisation de nitrure de bore, de talc ou de silice comme agent de formation de noyaux.
